# EUROPEAN PATENT APPLICATION

(11) **EP 3 479 973 A1**
(43) Date of publication of application: **08.05.2019**
(21) Application number: 18199865.9
(22) Date of filing: 11.10.2018
(51) Int. Cl.: B25J 9/16

(54) **INFORMATION PROCESSING APPARATUS AND ROBOT ARM CONTROL SYSTEM**

(30) Priority: 30.10.2017 JP 2017209394
(71) Applicant: Kabushiki Kaisha Toshiba, Minato-ku Tokyo 105-0023 (JP); Toshiba Infrastructure Systems & Solutions Corporation, Kawasaki-shi, Kanagawa 212-0013 (JP)
(72) Inventor: SATO, Masataka, Kawasaki-shi, Kanagawa 212-0013 (JP); WATANABE, Yuka, Kawasaki-shi, Kanagawa 212-0013 (JP)
(74) Representative: Horn Kleimann Waitzhofer Patentanwälte PartG mbB

(57) **Abstract**

An information processing apparatus supplies information to a robot arm that includes a holding mechanism for holding an article by suctioning the article and a moving mechanism for moving the holding mechanism. The apparatus comprises a communication interface and a controller. The controller calculates a suction point at which the holding mechanism attempts to suction the article. The suction point is calculated using an image captured by a camera. When the controller cannot calculate the suction point using the image, the controller acquires a selected region from an operation terminal operated by an operator, then recalculates the suction point on the basis of the selected region, and attempts suctioning at suction point calculated using the selected region.

## Description

### FIELD

Embodiments described herein relate generally to an information processing apparatus and a robot arm control system.

### BACKGROUND

A sorting system for delivering articles, such as packages or parcels, requires sorting packages according to intended delivery destinations. In one sorting system a holding mechanism holds an article by suction, and a robot arm moves the holding mechanism.

In a sorting system including a robot arm, a shape of an article is recognized on the basis of an image, and a suction point at which the holding mechanism can attach to the article is determined on the basis of a recognition result. However, when there is an error in recognition, there is a possibility that a suction point might not be determinable, or in some cases the holding mechanism might be moved to an intended suction point, but the holding mechanism may be unable to attach to the article as intended. In such cases, it can be necessary to stop operations of the robot arm and have an operator adjust the position of the article.

### BRIEF DESCRIPTION OF THE DRAWINGS

Fig. 1 is a diagram illustrating a sorting system according to an embodiment.
Fig. 2 is a diagram of an information processing apparatus according to an embodiment.
Fig. 3 is a diagram of an operation terminal according to an embodiment.
Fig. 4 is a flowchart illustrating an operation of a robot arm according to an embodiment.
Fig. 5 is a flowchart of an operation of the information processing apparatus according to an embodiment.
Fig. 6 is a flowchart of an operation of the information processing apparatus according to an embodiment.
Fig. 7 is a flowchart of an operation of the information processing apparatus according to an embodiment.
Fig. 8 is a diagram of an embodiment of an image supplied from a camera.
Fig. 9 is a diagram illustrating an embodiment of a mask image.
Fig. 10 is a diagram illustrating an embodiment of a mask image.
Fig. 11 is a flowchart of an operation of the operation terminal according to an embodiment.
Fig. 12 is a flowchart of an operation of the operation terminal according to an embodiment.
Fig. 13 is a diagram of an embodiment of a result of an operation performed by an operator.
Fig. 14 is a diagram of an embodiment of a result of an operation performed by the operator.
Fig. 15 is a diagram of an embodiment of a result of an operation performed by the operator.

### DETAILED DESCRIPTION

One embodiment of an information processing apparatus for a robot arm includes a communication interface connected to the robot arm. The robot arm includes a holding mechanism for holding an article by suction of the article and arm mechanism for moving the holding mechanism. A controller is configured to calculate a suction point on the article at which the holding mechanism can suction the article. The suction point is calculated on the basis of an image of the article captured by a camera from a predetermined range. When the suction point is successfully calculated, calculated suction point is indicated to the robot arm via the communication interface. An operation terminal is configured to receive image information from the camera, and generate a selected region in the image information using user input supplied to the operation terminal. When the suction point can not be calculated by the controller, the controller is further configured to supply the image to the operation terminal as image information and to acquire the selected region from the operation terminal and recalculate the suction point using the selected region. The recalculated suction point is supplied to the robot arm via the communication interface.

Hereinafter, example embodiments will be described with reference to the drawings.

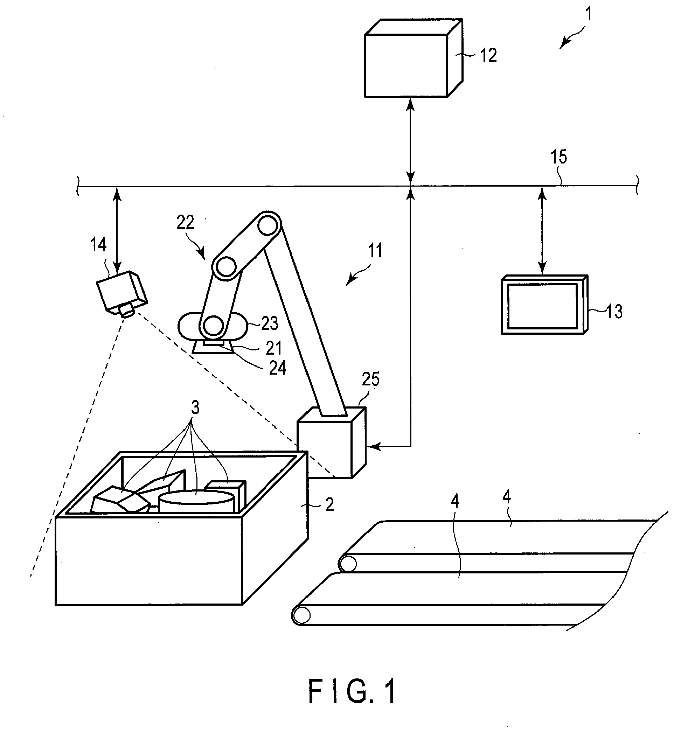

Fig. 1 is a diagram illustrating a schematic configuration example of a sorting system 1.

The sorting system 1 is a system sorting articles 3, which are sorting targets mounted in a source location such as cart 2, into predetermined sorting destinations. The sorting destinations are, for example, belt conveyers 4. The sorting destinations are not limited to the belt conveyers 4, and may be sorting baskets or workbenches.

The sorting system 1 includes a robot arm 11, an information processing apparatus 12, and an operation terminal 13. The sorting system 1 further includes a camera 14. The robot arm 11, the information processing apparatus 12, the operation terminal 13, and the camera 14 can perform communication with each other via a network 15.

First, a description will be made of a configuration of the robot arm 11.

The robot arm 11 is a device which picks up the article 3 from the cart 2 and supplies the article to a sorting destination. The robot arm 11 includes a holding mechanism 21, an arm mechanism 22, a contact sensor 23, a pressure sensor 24, and a controller 25.

The holding mechanism 21 includes, for example, at least one suction pad for suctioning the article 3. The suction pad includes a pad portion which is brought into contact with a surface of the article 3 and communicates with a vacuum pump (not specifically illustrated) controlled by the controller 25 .

The arm mechanism 22 is a mechanism moving the holding mechanism 21. The arm mechanism 22 includes a plurality of arms, and joint mechanisms connecting the plurality of arms to each other. The joint mechanisms are moved by actuators controlled by the controller 25, so as to drive the arms.

The contact sensor 23 is a sensor sensing stress applied to the holding mechanism 21. The contact sensor 23 senses, for example, stress applied to the holding mechanism 21 from a vertical direction. The contact sensor 23 transmits a sensing result to the controller 25. Specifically, in a case where the contact sensor 23 senses stress applied to the holding mechanism 21 from the vertical direction, an ON signal is supplied to the controller 25.

The pressure sensor 24 is a sensor sensing pressure in the suction pad of the holding mechanism 21. The pressure sensor 24 senses, for example, pressure of a connection portion where the suction pad of the holding mechanism 21 is connected to the vacuum pump. The pressure sensor transmits a sensing result to the controller. Specifically, in a case where the pressure sensor 24 senses that pressure in the suction pad of the holding mechanism 21 is negative pressure, an ON signal is supplied to the controller 25.

The controller 25 controls operations of the holding mechanism 21 and the arm mechanism 22. The controller 25 includes a memory (not illustrated), and a calculation element (not illustrated) controlling operations of the holding mechanism 21 and the arm mechanism 22 by executing a program stored in the memory. The controller 25 may include an operation sequencer or the like.

The camera 14 includes a lens, and an imaging element which converts light imaged by the lens into image data. An angle of view of the lens of the camera 14 is adjusted such that the inside of the cart 2 with the articles 3 to be picked up by the robot arm 11 can be imaged. For example, the lens of the camera 14 is disposed such that a range in which the article 3 can be suctioned by the holding mechanism 21 is included in an angle of view. The camera 14 supplies an image generated by imaging the inside of the cart 2 to the information processing apparatus 12 via the network 15. As the camera, for example, a 3D (or stereoscopic) camera which can measure information regarding a distance to the article 3 may be used.

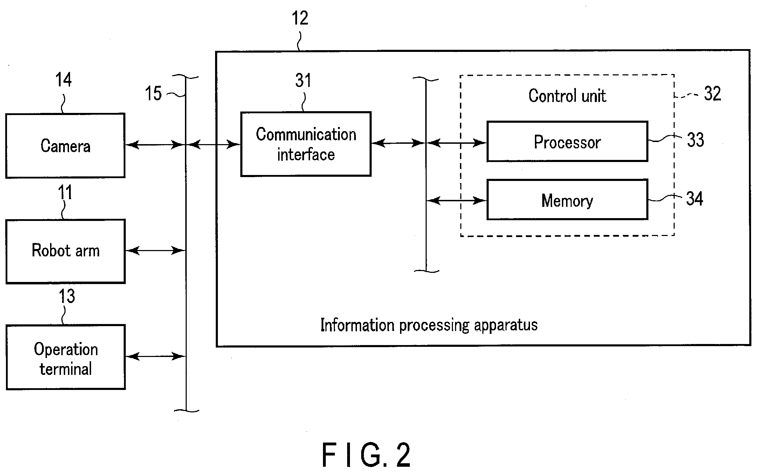

Fig. 2 is a diagram illustrating a configuration example of the information processing apparatus 12.

The information processing apparatus 12 is an apparatus supplying coordinate information to the robot arm 11. The coordinate information is a coordinate in a surface (horizontal surface) orthogonal to the vertical direction, and is information indicating a suction point which is a position where the suction pad of the holding mechanism 21 of the robot arm 11 suctions the article 3. In other words, the information processing apparatus 12 gives an instruction for a suction point to the robot arm 11. For example, the information processing apparatus 12 is configured with an apparatus such as a personal computer (PC) capable of processing data and storing data.

The information processing apparatus 12 includes a communication interface 31 and a control unit 32.

The communication interface 31 is used to communicate with other apparatuses other than the information processing apparatus 12. The communication interface 31 includes terminals and circuits corresponding to a communication standard for communicating with the robot arm 11, the operation terminal 13, and the camera 14 via the network 15. The communication interface 31 communicates with the robot arm 11, the operation terminal 13, and the camera 14 under the control of the control unit 32.

The control unit 32 is a processing unit performing various processes. The control unit 32 includes a processor 33 and a memory 34.

The processor 33 is a calculation element performing a calculation process. The processor 33 is configured with, for example, a CPU. The processor 33 performs various processes on the basis of a program stored in the memory 34.

The memory 34 is a storage device storing a program and data. The memory 34 includes at least one of, for example, a ROM which is a read only nonvolatile memory, a RAM which temporarily stores data, and a storage which stores data.

Next, a description will be made of a configuration of the operation terminal 13.

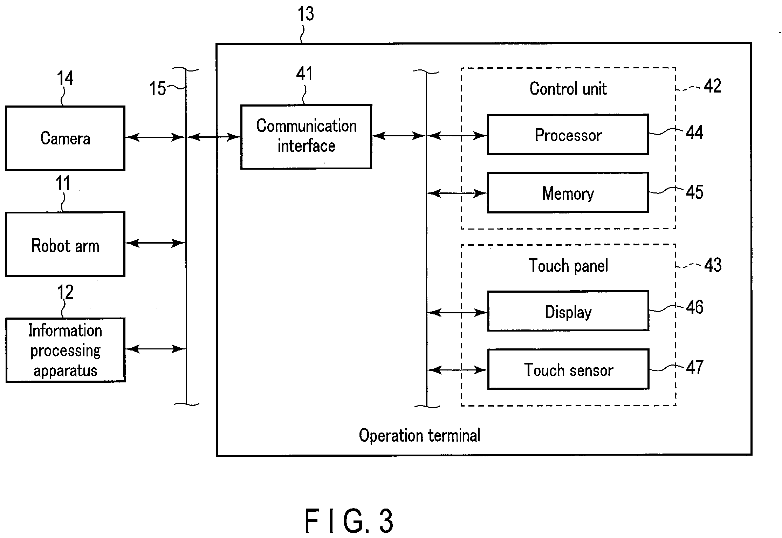

Fig. 3 is a diagram illustrating a configuration example of the operation terminal 13.

The operation terminal 13 is a device supplying information based on an operation to the information processing apparatus 12. The operation terminal 13 includes a communication interface 41, a control unit 42, and a touch panel 43.

The communication interface 41 is used to communicate with apparatuses other than the operation terminal 13. The communication interface 41 includes terminals and circuits corresponding to a communication standard for communicating with the robot arm 11, the information processing apparatus 12, and the camera 14 via the network 15. The communication interface 41 communicates with the robot arm 11, the information processing apparatus 12, and the camera 14 under the control of the control unit 42.

The control unit 42 is a processing unit performing various processes. The control unit 42 includes a processor 44 and a memory 45.

The processor 44 is a calculation element performing a calculation process. The processor 44 is configured with, for example, a CPU. The processor 44 performs various processes on the basis of a program stored in the memory 45.

The memory 45 is a storage device storing a program and data. The memory 45 includes at least one of, for example, a ROM which is a read only nonvolatile memory, a RAM which temporarily stores data, and a storage which stores data.

The touch panel 43 is a device which displays a screen and generates an operation signal based on an operation. The touch panel 43 includes a display 46 and a touch sensor 47 integrally configured with each other. The operation terminal 13 may include a display on which a screen is displayed and an operation unit which generates an operation signal based on an operation, instead of the touch panel 43. The operation unit may be any input unit such as a mouse, a trackball, a keyboard, and a trackpad.

The display 46 displays a screen on the basis of display data (screen data) supplied from the control unit 42 or a graphic controller.

The touch sensor 47 generates an operation signal indicating a position touched by an operator operating the operation terminal 13 on a screen displayed on the display 46.

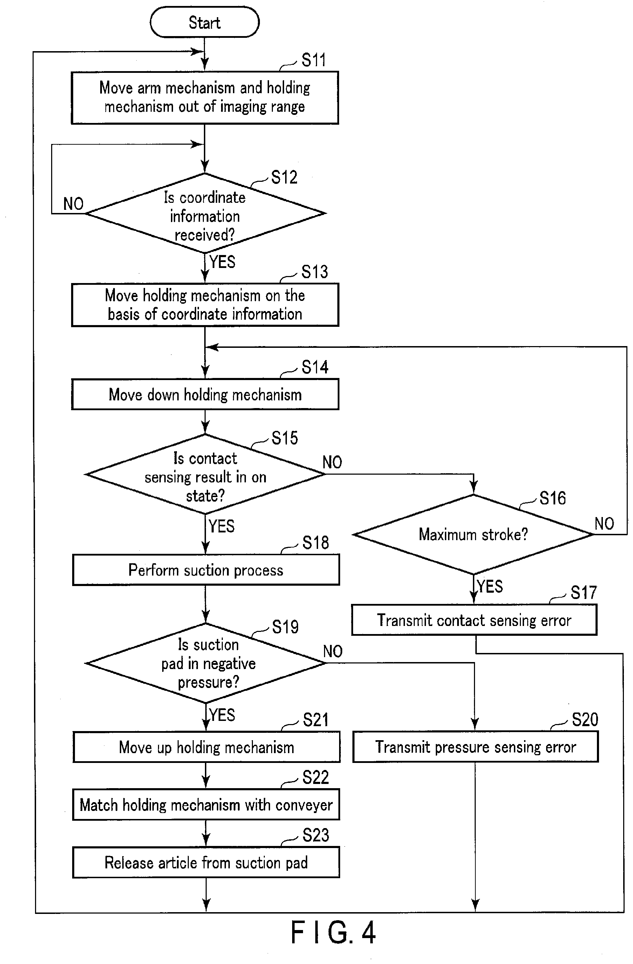

Fig. 4 is a flowchart illustrating an operation of the robot arm 11.

The controller 25 of the robot arm 11 moves the arm to be outside of the angle of view (that is, beyond of the imaging range) of the lens of the camera 14 (step S11). For example, the controller 25 causes the actuator to move the joint mechanism of the arm mechanism 22, so as to drive the arm mechanism 22, and thus moves the arm mechanism 22 and the holding mechanism 21 out of the imaging range. The camera 14 acquires an image at a timing at which the arm mechanism 22 and the holding mechanism 21 are moved out of the imaging range, and transmits the image to the information processing apparatus 12.

The controller 25 moves the arm mechanism 22 and the holding mechanism 21 out of the imaging range, and then waits for coordinate information to be supplied from the information processing apparatus 12 (step S12).

In a case where coordinate information is supplied from the information processing apparatus 12 (YES in step S12), the controller 25 moves the suction pad of the holding mechanism 21 on the basis of the coordinate information (step S13). For example, the controller 25 controls the arm mechanism 22 to move the suction pad of the holding mechanism 21 to a suction point indicated by the coordinate information. More specifically, the controller 25 controls the arm mechanism 22 such that the suction point indicated by the coordinate information will overlap a reference point in the suction pad of the holding mechanism 21. The reference point in the suction pad may be, for example, the center (centroid) of the suction pad, and may be any point in the suction pad.

The controller 25 controls the arm mechanism 22 to move down the holding mechanism 21 at the suction point (step S14) .

The controller 25 determines whether or not a contact sensing result of the contact sensor 23 is in an ON state (step S15). The controller 25 determines whether or not the suction pad of the holding mechanism 21 has been brought into contact with a surface of the article 3 on the basis of the sensing result of the contact sensor 23. For example, in a case where an ON signal is received from the contact sensor 23, the controller 25 determines that the suction pad of the holding mechanism 21 has been brought into contact with the surface of the article 3. In other words, the controller 25 determines whether or not the suction pad is contacting the article 3.

In a case where an ON signal is not received from the contact sensor 23 (NO in step S15), the controller 25 determines whether or not the maximum stroke has occurred (step S16). In a case where the holding mechanism 21 cannot be moved down any farther by the arm mechanism 22, the controller 25 determines that the maximum stroke has occurred.

In a case where it is determined that the maximum stroke has not occurred (NO in step S16), the controller 25 proceeds to a process in step S14, and controls the arm mechanism 22 to move down the holding mechanism 21 again. Consequently, the controller 25 moves the holding mechanism 21 downward until the suction pad is brought into contact with the surface of the article 3.

In a case where it is determined that the maximum stroke occurs (YES in step S16), the controller 25 transmits an contact sensing error indicating that the suction pad is not brought into contact with the article 3 to the information processing apparatus 12 (step S17), and proceeds to a process in step S11. In other words, in a case where the suction pad of the holding mechanism 21 is not brought into contact with the surface of the article 3 even if the holding mechanism 21 is moved down to the maximum stroke at the suction point for which the instruction is given from the information processing apparatus 12, the controller 25 transmits the contact sensing error to the information processing apparatus 12. The controller 25 moves the arm mechanism 22 and the holding mechanism 21 beyond the angle of view of the camera 14, and waits for the next coordinate information to be received.

In a case where an ON signal is received from the contact sensor 23 in step S15 (YES in step S15), the controller 25 performs a suction process by using the holding mechanism 21 (step S18). The controller 25 controls the suction pad suctioning of the surface of the article 3 by operating the vacuum pump connected to the suction pad of the holding mechanism 21. For example, the controller 25 causes the inside of the suction pad to become vacuum using the vacuum pump while the suction pad is brought into contact with the article, and thus causes the suction pad to apply suction the surface of the article 3.

The controller 25 determines whether or not the pressure in the suction pad of the holding mechanism 21 is negative pressure on the basis of a sensing result (pressure sensing result) in the pressure sensor 24 (step S19). In other words, the controller 25 determines whether or not the suction pad of the holding mechanism 21 applies suctions the surface of the article 3 on the basis of the sensing result in the pressure sensor 24. For example, in a case where an ON signal is received from the pressure sensor 24, the controller 25 determines that the inside of the suction pad of the holding mechanism 21 is at vacuum, and thus the suction pad suctions the surface of the article 3.

In a case where it is determined that the pressure in the suction pad of the holding mechanism 21 is not negative pressure (NO in step S19), the controller 25 transmits a pressure sensing error to the information processing apparatus 12 indicating that the suction pad is not applying suction the article 3 (step S20), and proceeds to step S11. In other words, in a case where the suction pad does not suction the surface of the article 3 even though a suction process is performed with the suction pad of the holding mechanism 21 in contact with the surface of the article 3, the controller 25 transmits the pressure sensing error to the information processing apparatus 12. The controller 25 moves the arm mechanism 22 and the holding mechanism 21 beyond the angle of view of the camera 14, and waits for the next coordinate information to be received. In a case where it is continuously determined for a predetermined time whether or not the suction pad of the holding mechanism 21 is successfully applying suction to the surface of the article 3, and an ON signal is not received from the pressure sensor 24 for the predetermined time, the controller 25 may transmit a pressure sensing error to the information processing apparatus 12.

In a case where the controller 25 determines that the pressure in the suction pad of the holding mechanism 21 is negative pressure (YES in step S19), the controller 25 controls the arm mechanism 22 to move up the holding mechanism 21 holding the article 3 (step S21).

Once the holding mechanism 21 is moved up to a predetermined height, the controller 25 controls the arm mechanism 22 to move the holding mechanism 21 to a position corresponding to the belt conveyer 4 associated with a sorting destination (step S22).

Once the holding mechanism 21 is moved to the position corresponding to the belt conveyer 4 associated with a sorting destination, the controller 25 controls the holding mechanism 21 to release the article 3 from the suction pad (step S23), transmits a completion notification indicating that sorting of a single article is completed to the information processing apparatus 12, and proceeds to the process in step S11. Consequently, the article 3 released from the suction pad is placed on the belt conveyer 4. The controller 25 moves the arm mechanism 22 and the holding mechanism 21 from the view of the camera 14, and waits for the next coordinate information to be received.

When a finish instruction is supplied from the information processing apparatus 12, the controller 25 of the robot arm 11 moves the arm mechanism 22 and the holding mechanism 21 to predetermined positions and ends the process in Fig. 4.

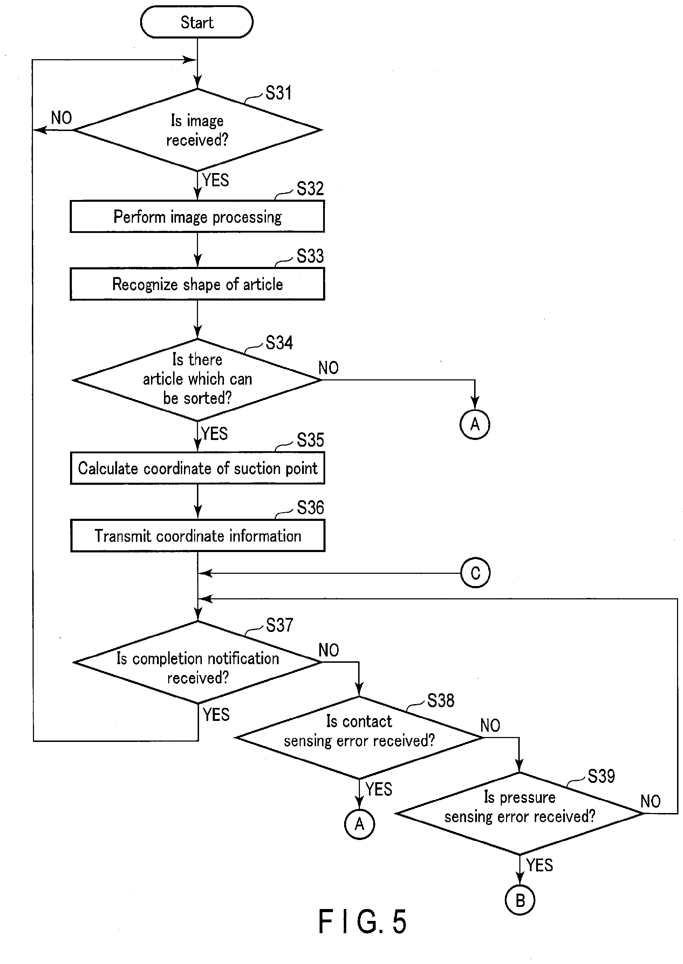

Figs. 5 to 7 are flowcharts illustrating an operation of the information processing apparatus 12.

The control unit 32 of the information processing apparatus 12 waits for an image to be supplied from the camera 14 (step S31). As described above, the camera 14 supplies an image of the inside of the cart 2 mounted with the articles 3 to be picked up by the robot arm 11, to the information processing apparatus 12.

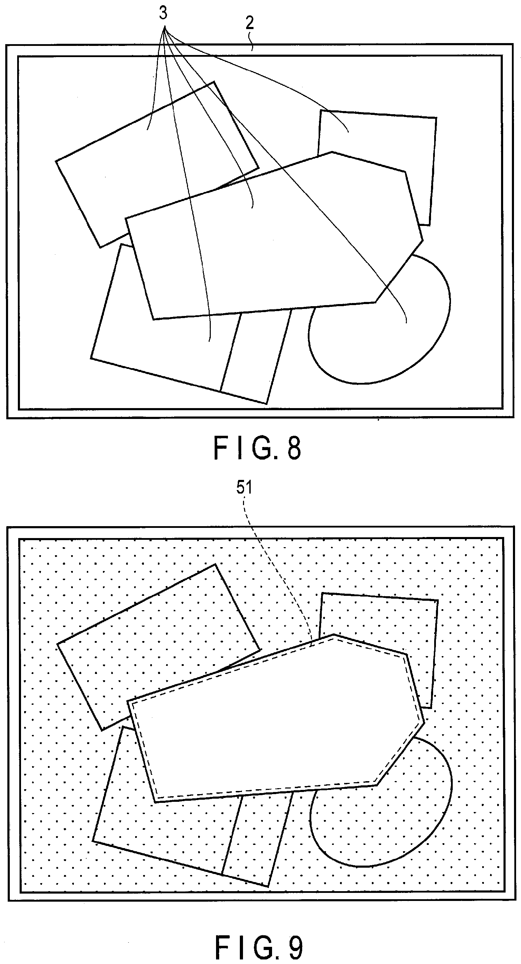

Fig. 8 is a diagram illustrating an example of an image supplied from the camera 14. As illustrated in Fig. 8, a plurality of articles 3 mounted in the cart 2 is depicted in the image supplied from the camera 14. Since the plurality of articles 3 are in the cart 2 in an overlapping manner, an article 3 having a part that is hidden by another article 3 is also shown.

When the image is received from the camera 14 (YES in step S31), the control unit 32 performs image processing on the received image (step S32). For example, the control unit 32 generates a mask image.

Fig. 9 is a diagram illustrating an example of a mask image. The mask image is an image obtained by extracting (or selecting) a part of the entire image. For example, the control unit 32 generates a mask image by extracting a region 51 that matches a surface which is present at the highest position in the cart 2 using distance information acquired by a distance sensor measuring a distance to the article 3.

The control unit 32 recognizes a shape of the article 3 which is a sorting target on the basis of mask image (step S33) . For example, the control unit 32 recognizes a contour (region outline) in the mask image as a shape of the article 3. The control unit 32 recognizes a surface surrounded by the contour in the image, that is, the region 51 depicted in Fig. 9 as a suction surface on which a suction process can be performed by the suction pad. The control unit 32 may recognize a shape of the article 3 by detecting a specific shape or outline in the image without performing image processing in step S32.

The control unit 32 determines whether or not there is an article to be sorted on the basis of a shape recognition result on the article 3 (step S34). For example, in a case where a suction surface can be recognized in step S33 and a size of the suction surface is larger than a preset size, the control unit 32 determines that there is an article which can be sorted. In a case where a suction surface can be recognized in step S33 and a size of the suction surface is smaller than the preset size, the control unit 32 determines that there is no article which can be sorted. In a case where a suction surface cannot be recognized in step S33, the control unit 32 determines that there is no article which can be sorted.

In a case where it is determined that there is a sortable article (YES in step S34), the control unit 32 calculates a coordinate of a suction point (step S35). For example, the control unit 32 calculates the coordinate of the suction point on the basis of the suction surface recognized in step S33. Specifically, the control unit 32 calculates a coordinate of the center (or the centroid) of the suction surface as the coordinate of the suction point.

The control unit 32 generates coordinate information indicating the coordinate of the suction point, and transmits the coordinate information to the robot arm 11 (step S36).

The control unit 32 determines whether or not a completion notification has been received from the robot arm 11 (step S37) . In a case where it is determined that the completion notification has been received from the robot arm 11 (YES in step S37), the control unit 32 proceeds to a process in step S31, and calculates a suction point of the next article 3 on the basis of an image supplied from the camera 14.

In a case where it is determined that the completion notification is not received from the robot arm 11 (NO in step S37), the control unit 32 determines whether or not a contact sensing error has been received from the robot arm 11 (step S38) .

In a case where it is determined that the contact sensing error is not received from the robot arm 11 (NO in step S38), the control unit 32 determines whether or not a pressure sensing error has been received from the robot arm 11 (step S39).

In a case where it is determined that the pressure sensing error is not received from the robot arm 11 (NO in step S39), the control unit 32 proceeds to the process in step S37, and waits any one of a completion notification, a contact sensing error, and a pressure sensing error to be supplied from the robot arm 11.

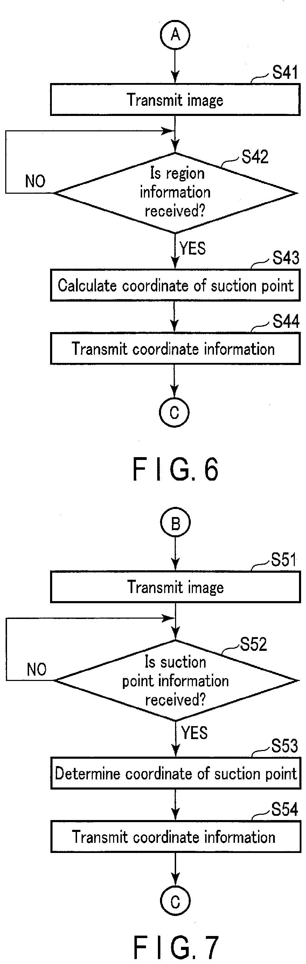

In a case where it is determined that there is no article which can be sorted in step S34 (NO in step S34), or it is determined that a contact sensing error has been received from the robot arm 11 in step S38 (YES in step S38), the control unit 32 proceeds to a process in step S41 illustrated in Fig. 6.

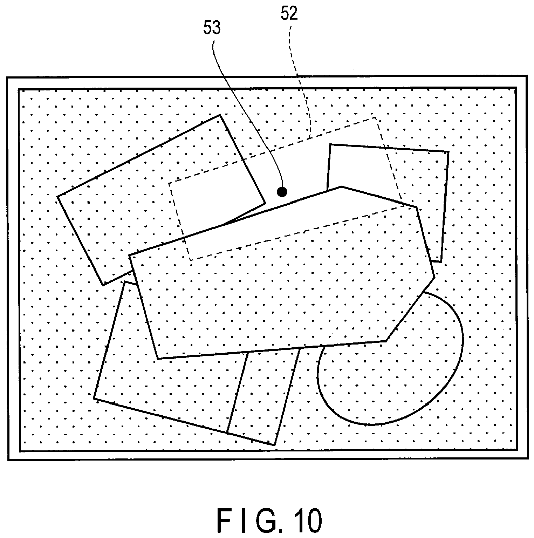

In a case where there is no article 3 in the cart 2, the article 3 is present in a dead angle of the camera 14, or a shape of the article 3 is not accurately recognized, it is supposed that the control unit 32 determines that there is no article which can be sorted. For example, as illustrated in Fig. 10, a suction surface 52 of the article 3 is wrongly recognized, and thus the article 3 is not present at a calculated suction point 53, the robot arm 11 cannot cause the suction pad to suction a surface of the article 3 even if the holding mechanism 21 is moved down to the maximum stroke. In this case, it is supposed that the control unit 32 receives a contact sensing error from the robot arm 11. In this case, it is necessary that an image is transmitted to the operation terminal 13 such that an operator of the operation terminal 13 can check the image, and a suction point can be determined on the basis of the operator' s input. Therefore, the control unit 32 transmits the image received from the camera 14 and information for requesting selection of a region to the operation terminal 13 (step S41) . For example, the control unit 32 may supply an image obtained by performing image processing on the image received from the camera 14 to the operation terminal 13. The control unit 32 may supply another image which is acquired by the camera 14 to the operation terminal 13.

In the operation terminal 13, region information which is information indicating a specific region on an image is provided through a region input process which will be described later. The operation terminal 13 transmits the generated region information to the information processing apparatus 12.

The control unit 32 determines whether or not the region information has been received from the operation terminal 13 (step S42). The control unit 32 waits for the region information to be received from the operation terminal 13.

In a case where it is determined that the region information has been received from the operation terminal 13 (YES in step S42), the control unit 32 calculates a coordinate of a suction point on the basis of the region information (step S43). For example, the control unit 32 calculates the coordinate of the suction point on the basis of the specific region on the image indicated by the region information. Specifically, the control unit 32 calculates a coordinate of the center (or the centroid) of the specific region as the coordinate of the suction point.

The control unit 32 generates coordinate information indicating the coordinate of the suction point calculated in step S43, transmits the coordinate information to the robot arm 11 (step S44), and proceeds to the process in step S37 in Fig. 5. Consequently, in a case where it is determined that there is no article which can be sorted, or the suction pad and the article 3 are not brought into contact with each other at a position corresponding to a suction point, a coordinate of a suction point can be calculated again on the basis of a region which is determined according to an operation of the operator. Therefore, even if poor recognition occurs, the information processing apparatus 12 can determine an accurate suction point without stopping an operation of the robot arm 11.

In a case where it is determined that a pressure sensing error is received from the robot arm 11 in step S39 (YES in step S39), the control unit 32 proceeds to a process in step S51 illustrated in Fig. 7.

In a case where there is a gap between the suction pad and the article 3, the pressure sensor 24 does not sense negative pressure even when a suction process is performed, and a notification of a pressure sensing error will be received from the robot arm 11. For example, in a case where the surface of the article 3 is uneven, there may be a gap between the suction pad and the uneven surface of article 3. In this case, it is necessary that an image be transmitted to the operation terminal 13 such that the operator of the operation terminal 13 can check the image, and the operator can then select a position where the article 3 might be more easily suctioned. Therefore, the control unit 32 transmits the image received from the camera 14, and information for requesting that a suction point be selected to the operation terminal 13 (step S51) . For example, the control unit 32 may supply an image obtained by performing image processing on the image received from the camera 14 to the operation terminal 13. The control unit 32 may also supply another, new image acquired by the camera 14 to the operation terminal 13.

In the operation terminal 13, suction point information indicating a certain coordinate (suction point) on the image is generated by a suction point input process which will be further described. The operation terminal 13 transmits the generated suction point information to the information processing apparatus 12.

The control unit 32 determines whether or not the suction point information has been received from the operation terminal 13 (step S52) . The control unit 32 waits for the suction point information to be received from the operation terminal 13.

In a case where it is determined that the suction point information has been received from the operation terminal 13 (YES in step S52), the control unit 32 determines a coordinate of a suction point on the basis of the suction point information (step S53). For example, the control unit 32 determines the coordinate indicated by the suction point information as the coordinate of the suction point.

The control unit 32 generates coordinate information indicating the coordinate of the suction point calculated in step S53, transmits the coordinate information to the robot arm 11 (step S54), and proceeds to the process in step S37 in Fig. 5. Consequently, in a case where the suction pad does not suction the article 3 in the suction process, a coordinate of a suction point can be calculated again according to an operation of the operator. Therefore, even in a case where there is a region not appropriate for suction in the surface of the article 3, the information processing apparatus 12 can determine an accurate suction point without stopping an operation of the robot arm 11.

In a case where a finish instruction is supplied from the operation terminal 13, the control unit 32 of the information processing apparatus 12 supplies the finish instruction to the robot arm 11 so as to finish the processes in Figs. 5 to 7.

In a case where it is determined that a completion notification has not been received from the robot arm 11 in step S37 in Fig. 5 then regardless of retransmission of coordinate information to the robot arm 11 through the processes in steps S41 to S44 in Fig. 6 or steps S51 to S54 in Fig. 7, the control unit 32 may send a notification of an error without proceeding to the processes in steps S38 and S37. For example, the control unit 32 transmits and displays a screen indicating a failure in holding to the operation terminal 13. For example, the control unit 32 may cause a display device or a speaker connected to the network 15 of the sorting system 1 to notify the operator of a failure in holding.

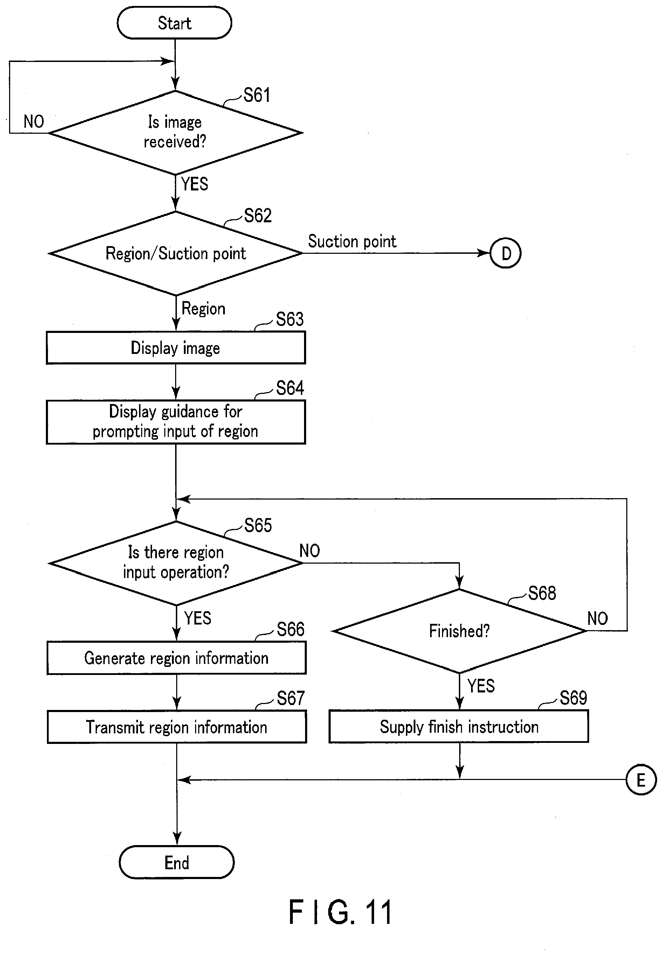

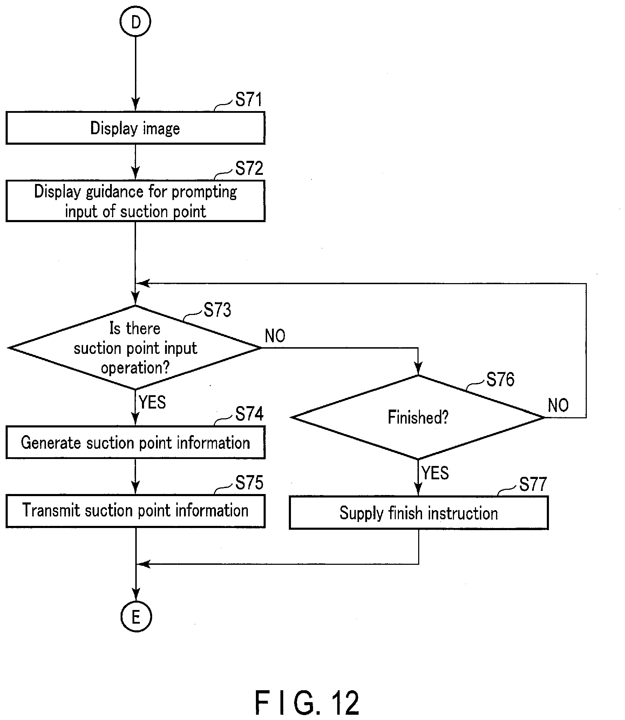

Figs. 11 and 12 are flowcharts illustrating an operation of the operation terminal 13.

The control unit 42 of the operation terminal 13 waits for an image to be supplied from the information processing apparatus 12 (step S61).

If an image is supplied from the information processing apparatus 12 (YES in step S61), the control unit 42 determines whether there has been a request for selection of a region or selection of a suction point (step S62) . For example, in a case where information for requesting selection of a region is transmitted from the information processing apparatus 12 along with an image, the control unit 42 determines that there has been a request for selection of a region. For example, in a case where information for requesting selection of a suction point is transmitted from the information processing apparatus 12 along with an image, the control unit 42 determines that there has been a request for selection of a suction point.

When a request for selection of a region is made, the control unit 42 performs a region input process. In this case, the control unit 42 first displays the supplied image on the display 46 (step S63).

The control unit 42 also displays information for prompting input of a region on the display 46 (step S64). The operator inputs a region by performing an operation of tracing some region on the touch panel 43. The control unit 42 may further display a finish button for stopping (finishing) an operation of the robot arm 11 on the display 46 without the inputting of a region by the operator.

For example, the information for prompting input of a region is information for prompting a contour of the article 3 to be drawn. In this case, the operator inputs a region by performing an operation of tracing a contour of the article 3 displayed on the display 46 of the touch panel 43.

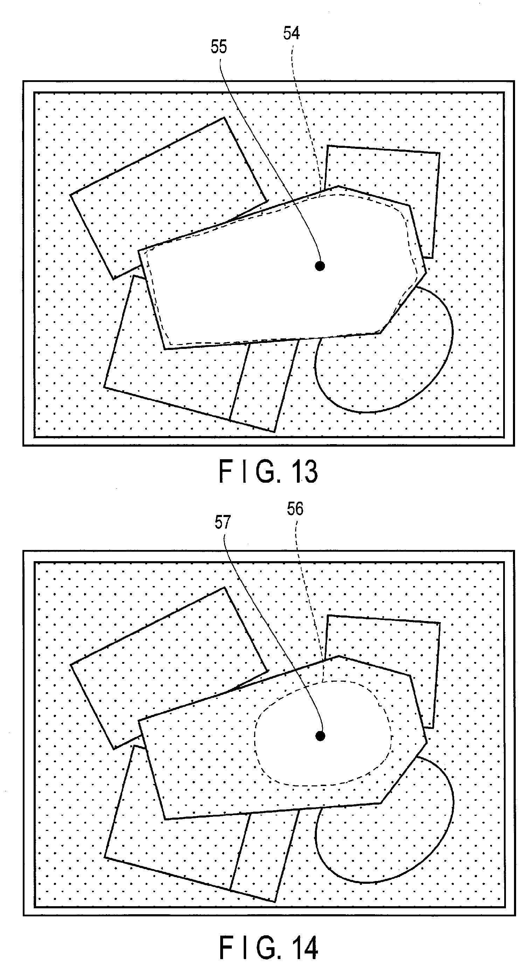

Fig. 13 is a diagram for explaining the result of the operator performing of the tracing of a contour of the article 3 displayed on the display 46. The control unit 42 specifies a region 54 on the image on the basis of a trajectory of touch positions on the touch sensor 47 when the operator performs the tracing operation. The information processing apparatus 12 may calculate a suction point 55 on the basis of the region 54 .

For example, the information for prompting drawing of a region is information for prompting an identification of a region which can be suctioned on the article 3. In this case, the operator inputs a region by performing an operation of tracing a contour of any region which is determined as being able to be suctioned in the article 3 displayed on the display 46 of the touch panel 43.

Fig. 14 is a diagram for explaining a result of the operator performing a tracing of a contour of any region selected as being able to be suctioned on the article 3 displayed on the display 46. The control unit 42 specifies a region 56 on the image on the basis of a trajectory of touch positions on the touch sensor 47 when the operator performs the operation of tracing the contour of the region. The information processing apparatus 12 may calculate a suction point 57 on the basis of the region 56.

The control unit 42 determines whether or not an operation for inputting a region has been performed (step S65). For example, in a case where an input operation of surrounding a region has been performed on the touch sensor 47 while the display in steps S63 and S64 is performed, the control unit 42 determines whether or not an operation of inputting a region has been performed, and the region as illustrated in Fig. 13 or 14 is selected.

In a case where it is determined that an inputting of a region has been performed and the region is specified (YES in step S65), the control unit 42 generates region information indicating a coordinate of the specified region on the image (step S66) . For example, the region information may be vector data generated on the basis of a trajectory of touch positions on the touch sensor 47, and may be raster data corresponding to a position of the region.

The control unit 42 transmits the generated region information to the information processing apparatus 12 (step S67), and finishes the process.

In a case where it is determined that an operation of inputting a region has not been performed in step S65 (NO in step S65), the control unit 42 determines whether or not an operation of the robot arm 11 is finished (step S68). For example, in a case where a predetermined time elapses in a state in which a region input operation is not performed, the control unit 42 determines that an operation of the robot arm 11 is finished. For example, in a case where a finish button displayed on the touch panel 43 is selected, the control unit 42 may determine that an operation of the robot arm 11 is finished.

In a case where it is determined that an operation of the robot arm 11 is not finished (NO in step S68), the control unit 42 proceeds to the process in step S64, and determines again whether or not a region has been input.

In a case where it is determined that an operation of the robot arm 11 is finished (YES in step S68), the control unit 42 supplies a finish instruction to the information processing apparatus 12 (step S69), and finishes the process in Fig. 11.

In a case where it is determined that there is a request for selection of a suction point in step S62, the control unit 42 performs a suction point input process. In this case, first, the control unit 42 displays the supplied image on the display 46 (step S71).

The control unit 42 displays information for prompting input of a suction point on the display 46 (step S72). The operator inputs a suction point by performing an operation of touching any suction point on the touch panel 43. The control unit 42 may further display a display button (finish button) for stopping (finishing) an operation of the robot arm 11 on the display 46 without inputting a suction point.

For example, the information for prompting input of a suction point is information for prompting selection of a position at which suction is possible by the suction pad in a surface of the article 3 to be sorted. In this case, the operator inputs a suction point by recognizing a state of the surface of the article 3 displayed on the display 46 of the touch panel 43 from the image and touching any position on the screen.

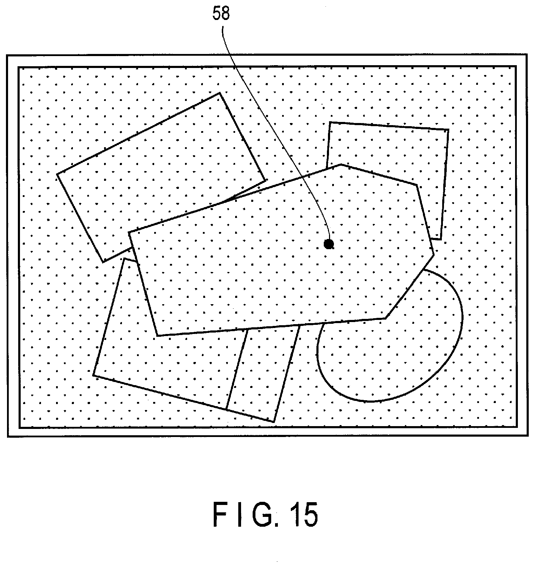

Fig. 15 is a diagram for explaining a result of the operator performing an operation of selecting a suction point in the surface of the article 3 displayed on the display 46 of the touch panel 43. The control unit 42 specifies a suction point 58 on the image on the basis of a touch position on the touch sensor 47.

The control unit 42 determines whether or not an operation of inputting a suction point is performed (step S73). For example, in a case where a touch operation is performed on the touch sensor 47 in a state in which the display in steps S71 and S72 is performed, the control unit 42 determines that the suction point as illustrated in Fig. 15 is specified.

In a case where it is determined that the suction point is specified (YES in step S73), the control unit 42 generates suction point information indicating a coordinate of the specified suction point on the image (step S74). The suction point information is data regarding a coordinate corresponding to the touch position on the touch sensor 47.

The control unit 42 transmits the generated suction point information to the information processing apparatus 12 (step S75), and finishes the process.

In a case where the suction point information (coordinate information) supplied from the information processing apparatus 12 is received, the controller 25 of the robot arm 11 controls the arm mechanism 22 to move the holding mechanism 21 at a position where the reference point in the suction pad of the holding mechanism 21 overlaps the suction point indicated by the suction point information. The controller 25 moves the holding mechanism 21 downward, and determines whether or not the suction pad of the holding mechanism 21 has been brought into contact with a surface of the article 3. In a case where the suction pad of the holding mechanism 21 has been brought into contact with the surface of the article 3, the controller 25 performs a suction process by using the holding mechanism 21 such that the suction pad suctions the surface of the article 3.

When a suction point is not specified in step S73 (NO in step S73), the control unit 42 determines whether or not an operation of the robot arm 11 is finished (step S76). For example, in a case where a predetermined time elapses before a suction point input operation is performed, the control unit 42 determines that an operation of the robot arm 11 is finished (timed out) . Also, when a finish button displayed on the touch panel 43 is selected, the control unit 42 may determine that an operation of the robot arm 11 is finished.

When an operation of the robot arm 11 is not finished (NO in step S76), the control unit 42 proceeds to the process in step S73, and determines again whether or not a suction point has been input.

In a case where it is determined that an operation of the robot arm 11 is finished (YES in step S76), the control unit 42 supplies a finish instruction to the information processing apparatus 12 (step S77), and ends the process in Fig. 12.

As described above, when it is determined that there is no sortable article according to image recognition results or that the suction pad cannot be brought into contact with the article 3 at a position corresponding to a suction point, the information processing apparatus 12 supplies information for requesting input of a region and an image to the operation terminal 13. The operation terminal 13 displays the image on the touch panel 43, and prompts the operator to select a region. Consequently, the operator inputs a region selection corresponding to a surface of the article 3 on the touch panel 43. The information processing apparatus 12 calculates a coordinate of a suction point again on the basis of the region which has been input by the operator, and supplies the coordinate of the suction point to the robot arm 11. As a result, even in a case where poor image recognition occurs, the information processing apparatus 12 can cause the robot arm 11 to perform operations on the basis of the recalculated suction point.

In a case where the operator traces a contour of the article 3, the operation terminal 13 can specify a region corresponding to a suction surface of the article 3 on an image. Consequently, even in a case where a suction surface is not accurately recognized in image processing by the information processing apparatus 12, the operation terminal 13 can be used to teach an accurate suction surface to the information processing apparatus 12.

For example, in a case where there is a region that is not appropriate for suctioning on the article 3, the operator can perform an operation of tracing a region excluding the inappropriate region. In this case, the operation terminal 13 can be used to specify a region by avoiding the inappropriate region. Consequently, the operation terminal 13 can be used to teach which regions can be more easily suctioned by the robot arm 11 to the information processing apparatus 12.

As described above, in a case where a suction process fails, the information processing apparatus 12 supplies information for requesting input of a suction point and an image to the operation terminal 13. The operation terminal 13 displays the image on the touch panel 43, and prompts the operator to input a suction point. Consequently, the operator inputs a position where the suction pad performs suction in a surface of the article 3 on the touch panel 43. The information processing apparatus 12 supplies a coordinate corresponding to the suction point which is input by the operator to the robot arm 11 as coordinate information. As a result, even in a case where a suction process fails, the information processing apparatus 12 can continuously cause the robot arm 11 to perform an operation by using the suction point which is input by the operator.

In the embodiment, the holding mechanism 21 of the robot arm 11 holds the article 3 by the suction pad suctioning a surface of the article 3, but this configuration is only an example. The holding mechanism 21 of the robot arm 11 may hold the article 3 by interposing the article 3 among two or more contact points. In this case, the suction point is replaced with two or more contact points. The contact points are not required to be points on a contour of the article 3 unlike the suction point. In this case, the operator inputs a contour of the article 3 by tracing the contour of the article 3 on an image on the operation terminal 13. The operation terminal 13 teaches information indicating the contour of the article 3 to the information processing apparatus 12, and thus the information processing apparatus 12 recalculates contact points. The operator may input two or more contact points on a contour of the article 3 on an image on the operation terminal 13. The operation terminal 13 teaches information indicating contact points where the article 3 can be held to the information processing apparatus 12, so as to cause the robot arm 11 to continuously perform sorting.

While certain embodiments have been described, these embodiments have been presented by way of example only, and are not intended to limit the scope of the present disclosure. Indeed, the novel embodiments described herein may be embodied in a variety of other forms; furthermore, various omissions, substitutions and changes in the form of the embodiments described herein may be made without departing from the spirit of the present disclosure. The accompanying claims and their equivalents are intended to cover such forms or modifications as would fall within the scope and spirit of the present disclosure.

## Claims

1. An information processing apparatus (12) for a robot arm (11), comprising:
a communication interface (31) connected to a robot arm that includes a holding mechanism (21) for holding an article by suction of the article and arm mechanism (22) for moving the holding mechanism;
a controller (32) configured to:
calculate a suction point on the article at which the holding mechanism can suction the article, the suction point being calculated on the basis of an image of the article captured by a camera from a predetermined range, and
when the suction point is successfully calculated, indicate the calculated suction point to the robot arm via the communication interface; and
when the suction point can not be calculated by the controller, the controller is further configured to supply the image to an operation terminal (13) as image information and to acquire a selected region from the operation terminal that generate the selected region in the image information using operator input, recalculate the suction point using the selected region, and supply the recalculated suction point to the robot arm via the communication interface.

2. The information processing apparatus according to claim 1, wherein the controller is configured to recalculate the suction point on the basis of the selected region from the operation terminal if the holding mechanism fails to contact the article at a previously calculated suction point.

3. The information processing apparatus according to claim 1, wherein the selected region is a region within an outer contour of the article depicted in the image, the outer contour being traced by the operator on the image at the operation terminal.

4. The information processing apparatus according to claim 1, wherein the selected region excludes areas on the image other than those including the article depicted in the image.

5. The information processing apparatus according to claim 1, wherein the controller is configured set a center of the selected region as the recalculated suction point.

6. The information processing apparatus according to claim 1, wherein the controller is configured to transmit a request for designation of a selected suction point to the operation terminal when the holding mechanism of the robot arm fails to suction the article at a previously calculate suction point, and the operation terminal is configured to receive an operator input that designates the selected suction point and transmit the selected suction point to the controller.

7. The information processing apparatus according to claim 1, wherein the controller is configured to output a notification that the article is unable to be picked up by the robot arm if the holding mechanism fails to hold the article using the recalculated suction point.

8. The information processing apparatus according to claim 1, wherein the operation terminal includes a touch panel on which the operator can trace regions on displayed images for the selection of the selected region.

9. A robot arm system (1), comprising:
a robot arm (11) that includes a holding mechanism (21) for holding an article by suction of the article and arm mechanism (22) for moving the holding mechanism; and
a controller (32) configured to calculate a suction point on the article at which the holding mechanism can suction the article, the suction point being calculated on the basis of an image of the article captured by a camera from a predetermined range, wherein
when the suction point is successfully calculated, the controller sends the calculated suction point to the robot arm, and
when the suction point is not successfully calculated, the controller sends the image to an operation terminal (13) that is configured to return selected region information using the image and an operator input supplied to the operation terminal, the controller being further configured to recalculate the suction point using the returned selected region information and send the recalculated suction point to the robot arm.

10. The robot arm system according to claim 9, wherein the robot arm further comprises a contact sensor that sends a signal to the controller according to contact of the holding mechanism with the article.

11. The robot arm system according to claim 9, wherein the robot arm further comprises a suction detector that sends a signal to the controller according to a suctioning state of the holding mechanism.

12. The robot arm system according to claim 11, wherein when the contact sensor fails to send the signal indicating a successful suctioning state, an error signal is sent to the operation terminal by the controller.

13. The robot arm system according to claim 9, wherein the controller is configured to output a notification that the article is unable to be picked up by the robot arm if the holding mechanism fails to hold the article using the recalculated suction point.

14. The robot arm system according to claim 9, wherein the controller is configured set a center of the selected region as the recalculated suction point.

15. A method for operating a robot arm (11), comprising:
acquiring an image of articles to be picked up by a robot arm;
processing the image to obtain coordinate information of an article;
moving a holding mechanism (21) of the robot arm on the basis of the coordinate information;
moving the holding mechanism towards the article;
attempting a suction process to hold the article with the holding mechanism at a suction point calculated in the processing of the image;
if the suction process fails to hold the article with the holding mechanism at the suction point, sending the image to an operation terminal (13) for designation of a selected region in the image according to an operator input supplied to the operation terminal;
receiving the selected region from the operation terminal;
recalculating the suction point using the selected region; and
repositioning the holding mechanism with respect to the article and attempting the suctioning process using the recalculated suction point to hold the article with the holding mechanism.
